# EUROPEAN PATENT APPLICATION

(11) **EP 2 006 061 A1**
(43) Date of publication of application: **24.12.2008**
(21) Application number: 07380176.3
(22) Date of filing: 18.06.2007
(51) Int. Cl.: B28B 7/34, B29C 33/40, B29C 33/44, B29C 49/04, E04F 11/18, E04H 17/14

(54) **Case-mould to manufacture rail posts, banisters, bases, pillars, crests and or any other pre-formed concrete, synthetic or similar and the machine for the elaboration of such case-mould after its moulding**

(71) Applicant: Cantos Torro, Jose, 03294 Elche (Alicante) (ES)
(72) Inventor: Cantos Torro, Jose, 03294 Elche (Alicante) (ES)

(57) **Abstract**

The case-mould is formed by a body (1) with the shape and dimensions of the rail post we need to obtain, of plastic, obtained with the collaboration of a blasting machine, with the peculiarity that it presents a couple of lengthwise and parallel lines of incisions (3) that enable, when we want to take the rail post out, the tearing of the coat by this strip (4) defined by these lines of incisions (3), strip (4) that extends towards one extreme (5) of the case also forming a flap (6) and that makes the tearing operation easier. The invention also concerns itself about a machine that, receiving the cases coming out of the blast machine, cuts the featheredges that the cases present, the filling mouth, micro-perforations, the incisions, sealing them.

## Description

### OBJECT OF THE INVENTION

The present invention is about a case-mould, those ones obtained by moulding a plastic material and the ones used to obtain rail posts by filling these coats with concrete, artificial stone or another similar or synthetic product, resins, etc.

The object of the invention is to procure a case-mould that, after obtaining the corresponding rail post, acts as packing until it is used and that, with special particularity, enables an easy unpacking.

The invention is also about the machine that, receiving the cases from their previous process, completes a perfect finishing on them.

The invention is placed then in the field of pre-formed concrete and similar, and more specifically, in the field of rail-posts and similar for the construction industry.

### ANTECEDENTS OF THE INVENTION

In the field of manufacturing of concrete rail posts and similar, the use of these case-moulds is completely generalised, obtained by a moulding blast forming a plastic tube with the shape and dimensions of the rail post we need to obtain, so that these case-moulds are used for the moulding of the rail posts and then they are eliminated and removed from the mould.

Nowadays, when these cases have to be removed from the mould, a blade or a cutter or similar is used to cut the case- mould but it is a very laborious, slow, rudimentary, anti-economical process and it requires specialized labour. It also presents some additional disadvantages that affect the grade of quality and finishing of the rail posts as a consequence of the cuts on the case that, on some occasions, leave marks or scratches from the cutting tools.

On the other hand and like other problems, the case-moulds come out of the blasting machine with featheredges which have to be eliminated and, nowadays, that is done by hand. The cases come out of the machine closed, with a small hole due to the blasting suffered at the inferior base, but another hole has to be made a filling hole, also done by hand, with a hole cutter placed in a motor near to which the case has to be put to make such hole.

### DESCRIPTION OF THE INVENTION

The case-mould which is presented has been designed in order to solve the moulding problem above mentioned, so that the process can be done in an extraordinarily easy and simple way, without using cutting tools, and at the same time, our machine solves the rest of the problems of manipulation previously mentioned and enables a totally automatic process in the manufacturing of the case-moulds.

For that, in a more specific way and according to one of the characteristics of the invention, the case-mould that is announced, starting from the basic structure of a conventional existing one, focuses its characteristics on the incorporation of two punching lines, lengthwise and parallel, determining a tearing tongue at the moment of unpacking the rail post, which makes that this pulling out results in, as mentioned before, being really quick and simple.

The machine that is also the object of the invention is provided with a trough that receives the case-moulds and has the means to operate successive operations, as follows:
- In the first place, the machine cuts the featheredges of the inferior end of the case-mould, with a blade in the shape of a guillotine that moves along powered by the hydraulic pumps;
- Next, it makes the filling hole for the concrete, with the action of a blade that spins round powered by an electric motor at the same time that goes along the slide helped by a pneumatic mechanism until it penetrates in the case cutting the plastic in order to make the required hole. The machine also eliminates the residual plastic disc generated for the obtaining of the mentioned hole, impeding that it goes into the coat.
- Then, the machine makes the lengthwise incisions, either with punching needles that perforate the case, with a laser, with serrated rollers or any other appropriate method.
- Next, it cuts the featheredges of the superior end of the case-mould of the rail post, also with a blade of guillotine shape that moves helped by pneumatic pistons, in the same way as in the inferior part and having eliminated the first operative phase of the machine.
- After that, the next step is the painting-blocking of the perforated lengthwise lines, using a powered spinning mini-roller with a continuous and dosed supply of a plastic liquid material, all that in order to avoid the leak of water from the mass concrete.
- Finally, there is a transverse cut in the inferior (bottom) part that provides the formation of an appendix or flap that acts as a lever to tear the mentioned tearing strip in the unpacking function of the rail post. This cut is done by two serrated mini-discs coaxially placed and separated in a dimension that coincides with the distance of the two lateral lines of incisions and facing them, incorporated in a high speed pneumatic spinning mini-machine helped by a pneumatic piston for its movement along two corresponding rails towards the place for cutting, and these mini-discs have the same distance in length as the lines of incisions of the case, in order to prolong the tearing strip.

Logically, all the mechanisms that participate in the machine: pistons, cutting elements, blocking and painting of the incisions, etc, are perfectly synchronized from the control unit of the machine.

### DESCRIPTION OF THE DRAWINGS

In order to complement the description and to help a better comprehension of the characteristics of the invention, in agreement with a preferential practical example, enclosed as part of the description, is a set of drawings of illustrative character:
Figure 1.- It shows, in perspective view, a case-mould for the manufacturing of rail posts according to the object of this presentation.
Figure 2.- It shows a perspective view of the machine for the finishing of the case-moulds, also centre of the invention.
Figure 3.- It shows another perspective of the machine in the previous figure.
Figure 4.- It shows a partial view and superior perspective of the inside of the trough.
Figure 5.- It shows a detail in perspective of the cutting mechanism of the inferior featheredge of the case-mould.
Figure 6.- It shows a detail in perspective of the cutting mechanism to obtain the teeming hole.
Figure 7.- It shows a detail in perspective of the cutting mechanism to obtain the teeming hole as well as the mechanism that eliminates plastic disc obtained after the cutting phase.
Figure 8.- It shows a variation of the device of elimination of such residual discs.
Figure 9.- It shows a detail in perspective of the punching mechanism to obtain the incision lines.
Figure 10.- It shows a detail in perspective of the cutting mechanism of the superior featheredge of the mould.
Figure 11.- It shows a detail in perspective of the mechanism of blocking of incisions obtained with the mechanism of figure 9.
Figure 12.- Finally, it shows another detail in perspective of the cutting mechanism for the flap that acts as a handle for the tearing process on the case.

### PREFERENTIAL REALISATION OF THE INVENTION

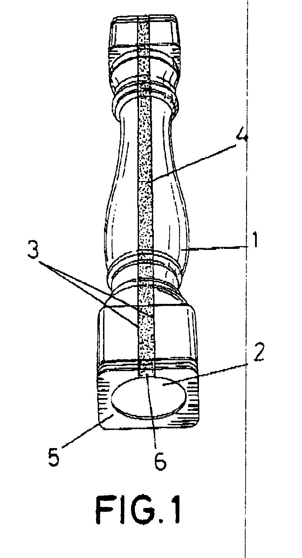

At the view of the pointed out figures and especially figure 1, we can observe that the invention is orientated to obtain a case-mould(1) to obtain a rail post of any shape, according to any design, provided with a teeming hole(2) in one of the extremes, which presents the special feature that on its lateral surface incorporates a pair of lengthwise, parallel punching lines(3), determining a tearing strip(4) that goes along the case(1) and that, when it reaches the inferior extreme(5), they prolong into a flap(6) that makes the manual grip easier to tear it and, consequently, facilitates the elimination of the case when the assembly of the rail post is to be done, so that these systems of elimination of the case turns out extremely fast and simple, without the risk of damaging the post.

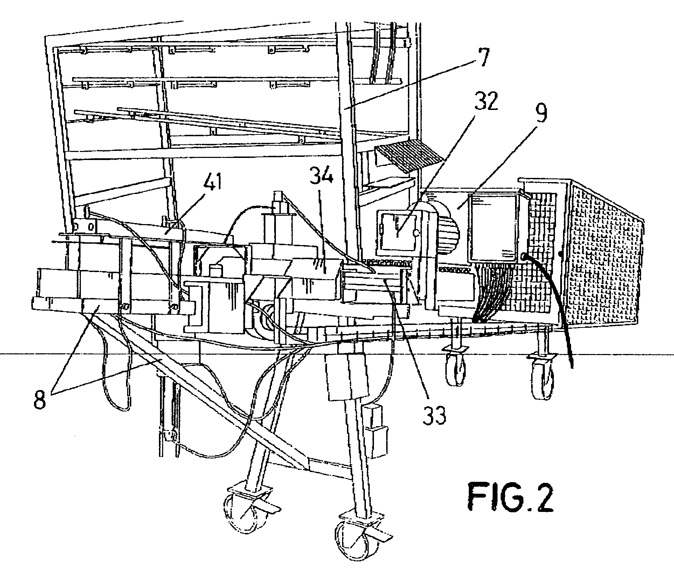

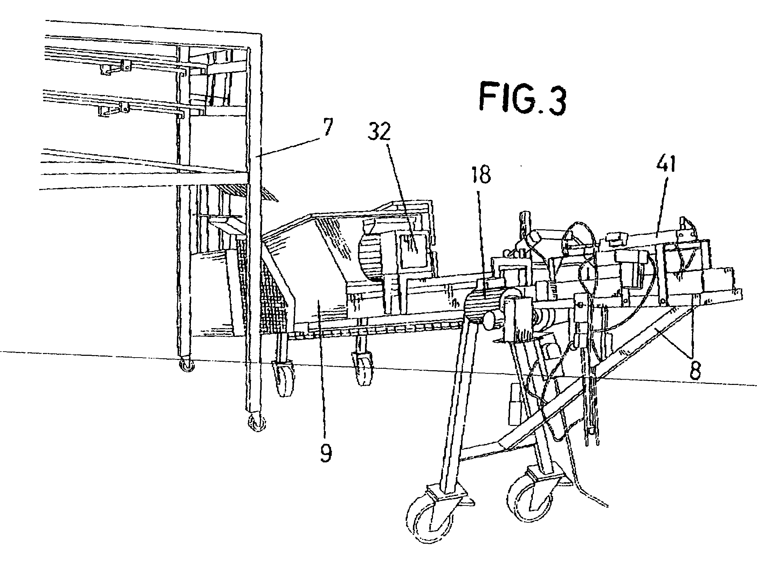

The machine to obtain these kind of cases, represented in figures 2 to 12, is designated to receive the cases(1) from the blasting machine, either directly or with the help of a feeder(7), represented in figure 2, these mentioned cases enter the machine with featheredges on their extremes and without the mentioned lengthwise punching lines(3) so that the function of the machine is to provide the case with a perfect finish , removing the featheredges of its extremes, making a teeming hole(2) on the inferior extreme and punching the lines(3) with their complementary flaps(6), all done in a totally automatic process.

For that, the machine is formed from a chassis, that incorporates a trough(8) on one of the extremes and this chassis adopts an inclined profile so that the trough(9) stays at an adequate level in height in order to receive the cases directly from the blasting machine and to expel them at an adequate height.

The trough(9) has a trunk-pyramidal, rectangular and elongated configuration in correspondence with the cases, and it has at the bottom a chain(10), conveniently powered in order to drag the cases in one direction or another.

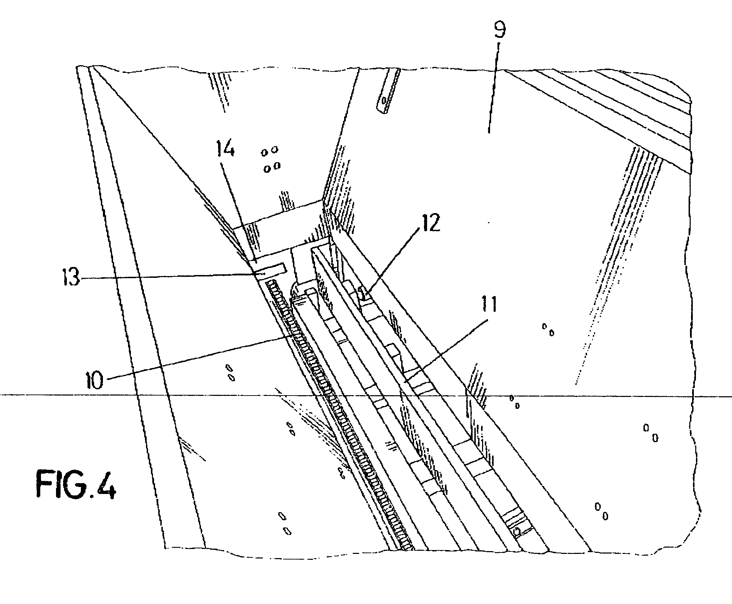

This chain adopts a slightly off-centre disposition, as shown in figure 4, and opposite there is a plate(11) driven by a pair of pistons(12) so that once the case has fallen into the trough(9), the plate(11) presses it against the opposite wall in the trough(9), placing it correctly so that the machine can work on it.

The chain(10) has some limits(13) to drag the cases and the trough(9) has a window(14) on the back end that allows the chain(10) to pass but does not permit the end of the case of which only the inferior featheredges are allowed in, but only the inferior base of the case is accessible through the window(14) with a sufficient width to be able to make the teeming hole.

At the rear part of the trough(9), on both sides of the window(14) there is a blade(15) connected to the stem of a piston(16) and displaceable along a rail(17), so that this blades cuts off the corresponding featheredges of the inferior part of the case, in an operative phase of the machine in which the dragging chain(10) moves back to lean the case on the limit shaped by the window(14).

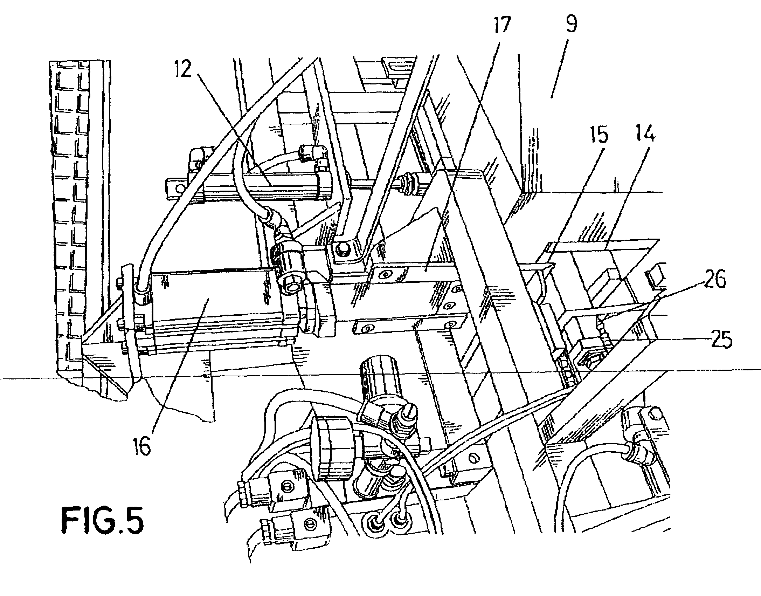

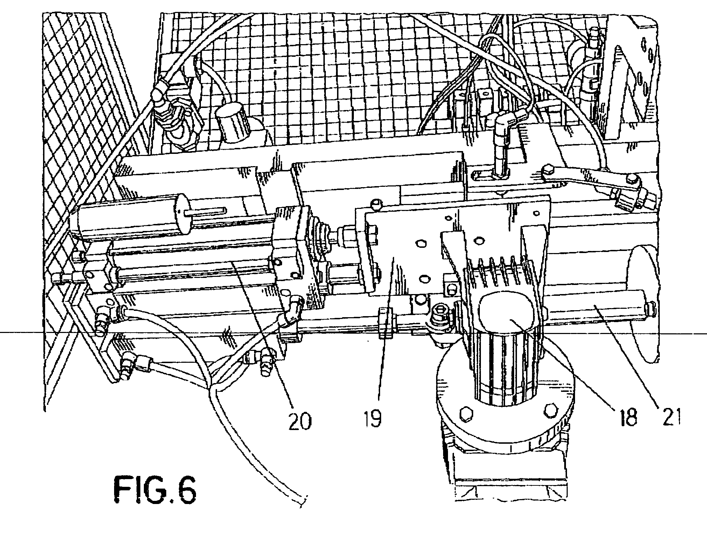

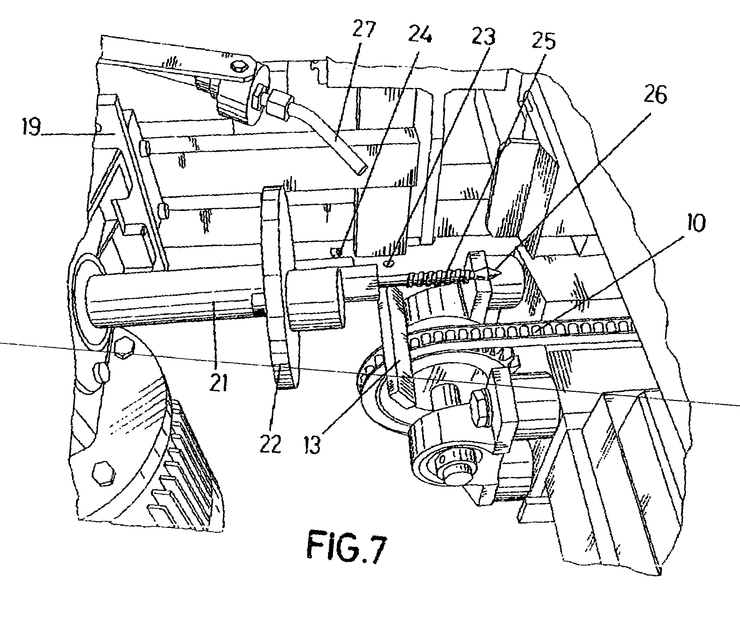

Also, at this rear part of the trough(9) we find the cutting mechanism to obtain the teeming hole(2), mechanism which appears partially visible in figure 5, where we can perfectly observe the above mentioned cutting blade, but that is more clearly observed in figures 6 and 7. This mechanism consists of a coaxial reducer(18), assembled on a support plate(19) which moves in parallel direction to the axel of the trough by a piston(20), presenting the exit axle(21) of the coaxial reducer(18) with the axle of the case(1) in position to work for it in the interior of the trough, axle(21) that coincides with a plate(22) which has an eccentric blade(23) whose eccentricity coincides with the radius of the hole(2) to be obtained in the case, so that such blade(23) describes a planetarium, circumferential movement that coincides with the cutting to be done on the case to obtain the teeming hole in it. This blade is fixed in an immoveable way with the collaboration of the set screw(24) and in correspondence with its rotation shaft(21), the shaft prolongs into a bit punch(25) with a conical end(26), that has to penetrate in the case, in such a way that when the blade(23) reaches the bottom part of the case, the bit punch(25) penetrates substantially in it, and when the piston(20) retracts the cutting part, after making the mentioned teeming hole, the bit punch(25) drags with it the residual disc when it is cut.

For the elimination of the mentioned residual disc, that is in order to leave the bit punch(25) in good conditions to repeat the operation, it is foreseen that, duly oriented with respect to the bit punch(25), the machine incorporates a blast nozzle(27) which is able to generate a gust of wind that obliquely attacks the bit punch (25) and provokes the expulsion of the disc.

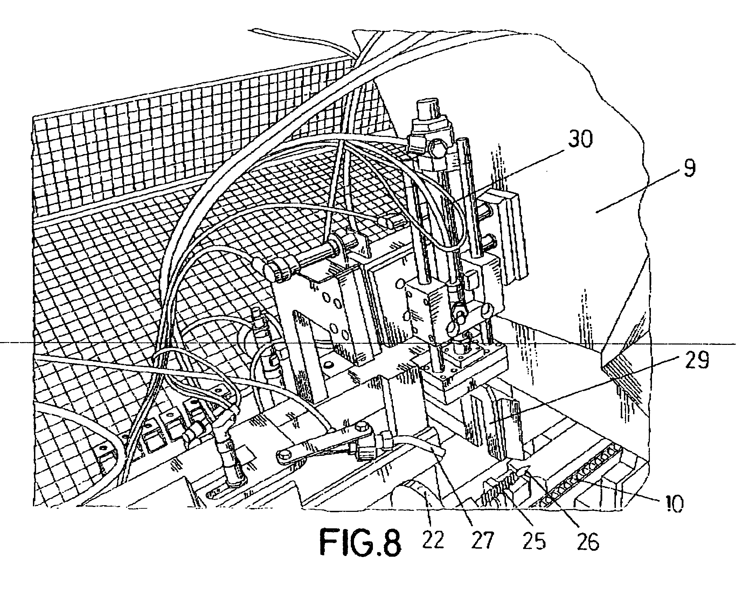

As an alternative to this blast nozzle (27) and as shown in figure 8, the use of a clamp (29) has been foreseen, vertically displaced by a piston (30), in such a way that mentioned clamp (29) is in a higher position during the advanced phase of cutting (23-25), allowing the blade to begin working and on finishing the cutting process, once the blade surpasses the clamp (29), this lowers and acts as a retainer for the residual disc, which remains ejected from the bit punch (25), by way of the rest of the manoeuvre.

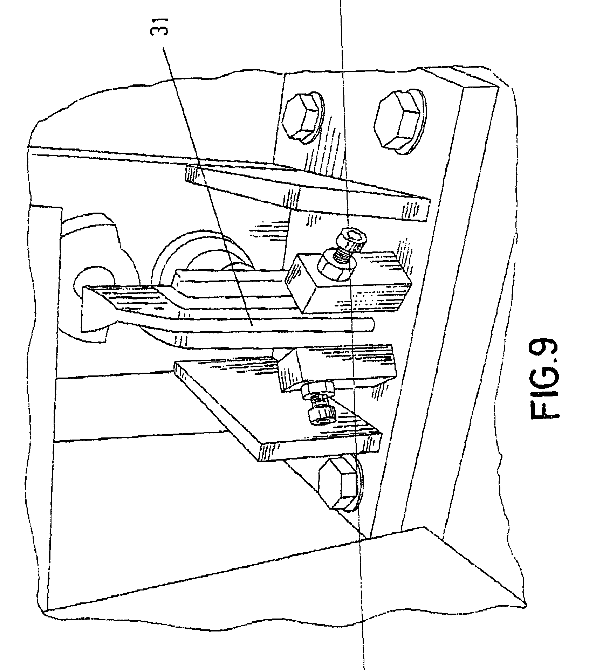

At this moment the chain (10) at the bottom of the trough changes its direction and advances towards the outlet, where a window similar to the existing window (14) on the other side of the trough(14), but bigger, allows the exit of the exterior part of the case, which passes under a perforator head (31), visible in figure 9, lodged in the hollow of a carcass (32) which at the same time is visible in figures 1 and 2 and which consists of a pair of needles or vertical punches that, acting alternatively in an analogical manner like a sewing machine, make the 2 lines (3) of the case (1), being distanced corresponding to the planned width for the tearing strip (4) of said case.

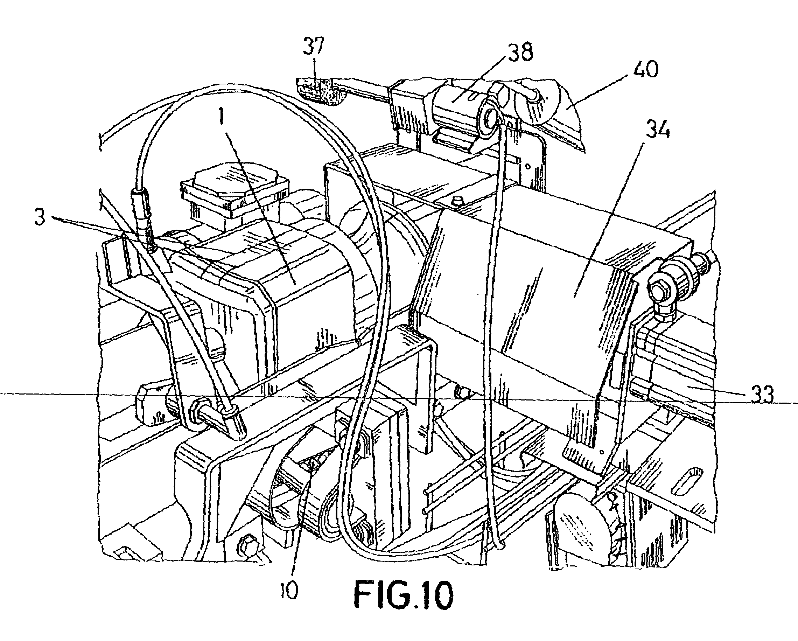

Immediately following, although it could also occur before, the chain (10) interrupts its movement leaving the upper part of the case (1), and more specifically the featheredge of said upper part, facing the other cutting blade driven by way of a transverse piston (33), especially visible in figure 10, where the blade driven by said piston remains hidden by a protector (34).

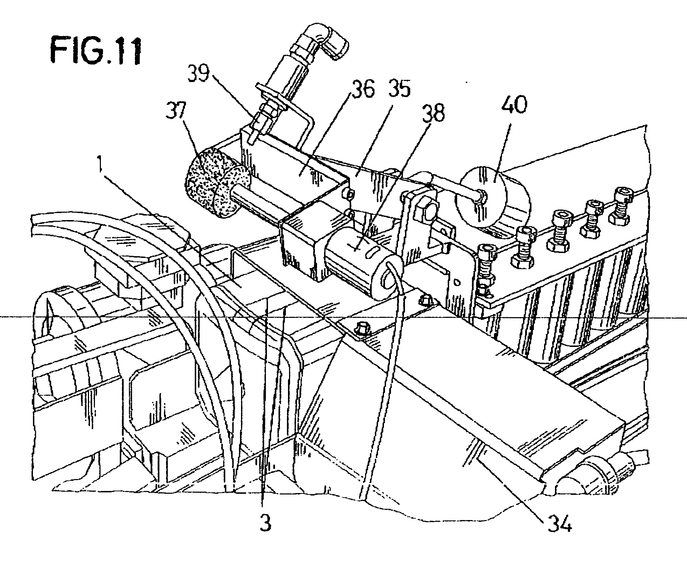

Given that the perforations (3) produced lengthwise on the case (1) could determine a loss of water at the time of filling the case with the concrete that will make up the rail post, covering them with an appropriate product, to whose effect is shown in figure 11, on the chassis of the machine a rocker arm(35) is mounted that on one of its sides is finished off on a support (36), for a painting roller (37), driven in a spinning direction by a motor (38) mounted on its own support (36), and said roller (37) being assisted by a nozzle (39) to feed the roller with a sealing product.

The rocker arm (35) is assisted furthermore by a balance weight (40), in a variable position, which allows mentioned rocker arm (35) to tip in the approximate direction of the roller (37) to the case (1), by way of a gravitational effect and with appropriate pressure.

Logically this roller (37) must remain situated in the imaginary vertical passing position by the punching lines (3) of the case (1), and both its revolving movement and the contribution of the sealing product from the nozzle (39), that will interrupt the dead spaces defined between each pair of successive cases.

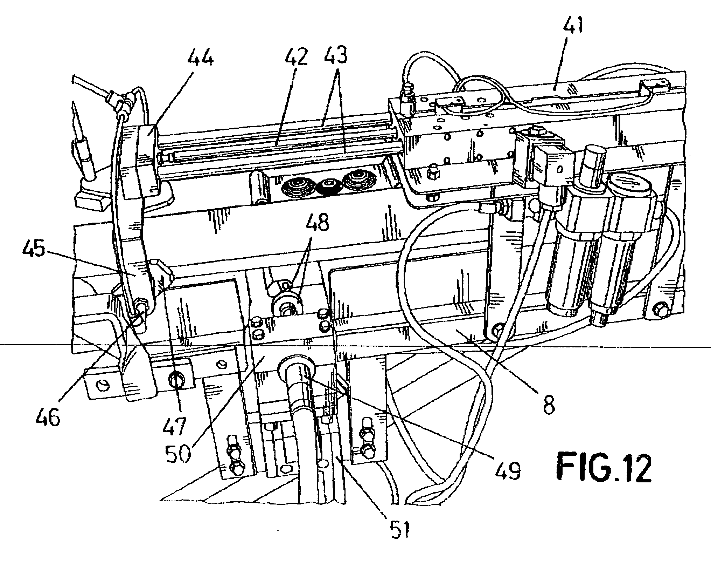

Evidently and as is observed in mentioned figure 11 the determining punching lines of the tearing strip for the opening of the case are interrupted on reaching the bases in such a way that said tearing strip becomes inoperable if did not extend towards one of the said bases. In order to achieve this extension of the punching lines (3) towards the lower base of the rail post, it has been foreseen, as figure 12 shows, that on the chassis of the machine another piston is mounted lengthwise (41) whose rod (42) and with the help of guides (43) is supported (44) and which at the same time a clamp (45) frames the case with its lateral branches as it goes along and receives through its free extremes mini-pistons (46) which clamp down in order to secure the rail post and drag it in collaboration with the piston (41) towards the working zone where there is a pair of serrated cutting discs (48), at equal distance with the punching lines (3) and which work on the inferior base of the case, and said discs (48) connect to a pneumatic object (49) which moves vertically over the base of the rail post and on doing this, the support (50) is driven by a piston (51) in such a way that these discs form tearing featheredges (6) in the case which is shown in figure 1.

All that is left to show is that the different mechanisms of the mechanical cutting process described above can be substituted by laser mechanisms or by any other conventional method.

## Claims

1. Case-mould for making banisters, handrails, bases, pillars, crests and/or any other preformed concrete, synthetic or similar items, of the type which are materialised into a one piece part obtained by blowing from a plastic tube and in the trough of a mould with the foreseen configuration for the banister to be obtained, **characterised** because it incorporates two punching lines (3), lengthwise and parallel, on the basis of micro-perforations, conveniently distanced to determine a tearing strip (4) which runs lengthwise along the body (1) of the case which widens in connection with one of the bases or extremities (5) of the case in a tongue likewise tearable, which opens towards the filling hole (2) of the case-mould when said tongue is situated on the side provided for said hole.

2. Case-mould for making of banisters, hand rails, bases, pillars, crests and/or any other prefabricated concrete, synthetic or similar items, according to claim 1, distinguished because the mentioned micro-perforations are closed by way of a sealing product which prevents water leaking out of the concrete in the filled part of the case.

3. Machine for making of the case-mould in the above claims, that having being conceived to be fed directly by the blast hole , or indirectly through an intermediate feeder (7), with the case-moulds with the featheredges on its extremes generated by the blast hole , distinguished by being made up of a chassis (8) in which a trough (9) of said case-moulds is set up, with which a splitting device helps with the featheredges of the lower extreme of each case-mould, a cutting mechanism to practise on one of the extremes of the case-mould the filling hole, a punching mechanism to obtain from the two lengthwise punch lines of the case-mould, a cutting mechanism for the featheredges of the other extreme of the case-mould, a plugging-painting mechanism of the micro-perforated lengthwise lines, and a transverse cutting mechanism of one of the extremes of the case-mould to obtain from the appendix of the tongue in function of handle to eliminate from the tearing strip in the removal of the banister, being these mechanisms duly motorised and synchronised to carry out continuously and automatically the making of the case-moulds.

4. Machine for making case-mould, according to claim 3, distinguished because the trough (9) adopts a configuration which is trunk-pyramided, rectangular, in accordance with the dimensions of the coat-moulds, and is supplied with a drag chain at the bottom (10), suitably motorised, with stops (13) to drag the cases, which adopts a decentralised disposition towards one of the sides of the trough, whereas in correspondence with the other side a mobile plate (11) plays, driven by pistons (12) which pressurise the case positioning it suitably on the chain (10), incorporating side windows to said trough (14), from which the back one acts also as a stop which impedes the case from going backwards but which leaves outside the featheredges of the corresponding side, whereas the previous one allows said case to come out.

5. Machine for making case-moulds, according to claims 3 and 4, distinguished because immediately behind mentioned back window (14) of the trough (9) there is a cutting blade (15) for the featheredges of the back edge of the rail post, driven by a piston (16) and suitably driven by a guide (17), adopting a position for said piston such that the movement of the blade (15) is transversal with respect to the imaginary axle of the case-mould.

6. Machine for making case-moulds, according to claims 3 and 5, distinguished because in the rear part of the trough, in an axial layout, there is a piston (20) which moves a support plate (19) on a reducer (18) parallel to the piston (20), incorporating a plate (22) on which a cutting blade (23) is situated, with a distance in respect to the axis of the plate (22) in harmony with the radius of the hole to be obtained in the case, whereas axially from said plate a bit punch(25) emerges which extends considerably further away from the blade (23) which is finished off into a conical point (26) and that is destined to penetrate into the case-mould in such a manner that said bit punch(25) acts as a way of retention and extraction for the residual disc powered by the blade (23) in the cutting of the filling mouth.

7. Machine for the making of case-moulds, according to claim 6, distinguished because the cutting mechanism (23-25) is assisted by a blow nozzle (27), duly oriented towards the bit punch (25), to eliminate from itself the mentioned residual disc corresponding to the fill orifice.

8. Machine for making case-moulds, according to claim 6, distinguished because in the surroundings of the rear edge of the trough (9), outside of it, there is a clamp (29), in a vertical layout and with concavity oriented downwards, vertically moved by a piston (30) the clamp which after the cutting operation to obtain the fill orifice of the case-mould, and after the start of the backward movement of the cutting mechanism it goes down framing the bit punch (25) and induces the extraction of the residual disc in the total backward movement of the bit punch (25).

9. Machine for making case-moulds, according to claims 3 to 8, distinguished because on the chassis (8) of the machine and the trough outlet (9), the punch mechanism is set up materialised in a pair of punches or vertically and alternatively moving needles, driven by a perforating head (31), punches designed transversally with respect to the path of the case-mould and which effectuate over it the two punch lines or determining lengthwise micro-perforations of the tearing strip(4).

10. Machine for making case-moulds, according to claims 3 to 9, distinguished because following the punching mechanism is the cutting mechanism for the featheredges on the other side of the case-mould, consisting of a transversal piston (33) that drives a blade which cuts laterally to the corresponding side of the case-mould.

11. Machine for making case-moulds, according to claims 3 to 10, distinguished because the sealing mechanism of the micro-perforations (3) consists of a rocker arm (35), mounted tilting on the chassis of the machine, finished off on one of its extremes with a support for a paint roller (37), driven in a revolving direction by a motor (38) and assisted by a supply nozzle for the sealing product, and the rocker arm has (35) on its other extreme a balance weight (40) of an adjustable position, in order that the roller descends by way of gravity towards the case-mould, with a controlled pressure due to the effect of the balance weight (40) and acting on the lengthwise punch lines (3) of the case-mould.

12. Machine for making case-moulds, according to claims 3 to 11, **characterised** because the opposite side to the chassis (8), the exit side, there is a cutting mechanism to obtain the manual tearing featheredge (6) of the case-mould strip (4), consisting of a pair of cogs (48) with a distance corresponding to the lengthwise punching lines (3) of the case-mould and opposite these, cogs (48) assisted by a tyre actuator (49) and mounted on a support (50) moved vertically by a piston (51) in such a way that said cogs (48) are susceptible to cover transversally the opposite side of the case-mould which is positioned in respect to said cogs (48) by way of a clamp (47) driven by small pistons (46) mounted on a yoke (45) moved lengthwise by a piston (41).

13. Machine for making case-moulds, according to claims 3 to 12, **characterised** because all the mechanical cutting mechanisms of the machine can be substituted by laser cutting mechanisms or by any other appropriate cutting mechanism.
